# EUROPÄISCHE PATENTSCHRIFT

(11) **EP 0 556 636 B1**
(45) Veröffentlichungstag und Bekanntmachung des Hinweises auf die Patenterteilung: **02.04.1997**
(21) Anmeldenummer: 93101623.2
(22) Anmeldetag: 03.02.1993
(51) Int. Cl.: G01B 17/02

(54) **Ultraschallwanddickenmessgerät für extrudierte Langprodukte, insbesondere Rohre**
Ultrasonic wall thickness measuring apparatus for extruded long products, in particular for conducts
Appareil ultrasonore de mesure d'épaisseur de paroi pour des produits longs de presse à extrusion, en particulier des conduits

(30) Priorität: 21.02.1992 DE 4205335
(43) Veröffentlichungstag der Anmeldung: 25.08.1993
(73) Patentinhaber: INOEX GmbH, D-32547 Bad Oeynhausen (DE)
(72) Erfinder: Krüger, Ernst, Dr., W-4504 Georgsmarienhütte (DE)
(74) Vertreter: Cohausz & Florack Patentanwälte

(56) Entgegenhaltungen:
- DE-A- 3 410 954
- DE-A- 4 019 865
- US-A- 3 147 169
- PATENT ABSTRACTS OF JAPAN vol. 9, no. 37 (P-335)(1760) 16. Februar 1985 ; & JP-A-59 180 317
- PATENT ABSTRACTS OF JAPAN vol. 7, no. 216 (P-225) 24. September 1983 ; & JP-A-58 108 454
- PATENT ABSTRACTS OF JAPAN vol. 12, no. 53 (P-668) 18. Februar 1988 ; & JP-A-62 201 357
- PATENT ABSTRACTS OF JAPAN vol. 13, no. 524 (P-964) 22. November 1989 ; & JP-A-12 14 756

## Beschreibung

Die Erfindung bezieht sich auf ein Ultraschallwanddickenmeßgerät für extrudierte Langprodukte, insbesondere Rohre, mit einem oder mehreren feststehenden Sensoren.

Ultraschallwanddickenmeßgeräte für extrudierte Produkte basieren auf der Laufzeitmessung des in das Produkt eingeleiteten Ultraschallsignals.

Die Laufzeit dieses Signals hängt vom Material des Produktes und dessen Temperatur ab. Um zumindest zu einer eindeutigen relativen Aussage der Wanddicke über die gesamte Breite oder den gesamten Umfang eines Langproduktes zu kommen, muß die Voraussetzung erfüllt sein, daß die Temperatur des Produktes über die gesamte Breite beziehungsweise über den gesamten Umfang an der oder den Meßstellen der Sensoren gleich ist. Diese Voraussetzung ist erfahrungsgemäß nicht mehr gegeben, wenn erst hinter einer üblicherweise vorgesehenen Durchlaufkühlkammer am formstabilen Langprodukt die Wanddicke gemessen wird. Deshalb ist bei einer bekannten Extrudieranlage das Ultraschallwanddickenmeßgerät zwischen der Kühlkammer und dem Extruderwerkzeug angeordnet, wobei es mit einem umlaufenden Sensor um eine wassergekühlte, mit Unterdruck beaufschlagte Kalibrierhülse angeordnet ist (DE 39 06 363 C1). Mit einem solchen, zwischen dem Extruderwerkzeug und der Kühlkammer angeordneten Ultraschallwanddickenmeßgerät läßt sich zwar ein verbessertes Meßergebnis erzielen, doch kann es auch hier in nicht vernachlässigbarem Umfang zu Unterschieden in der Temperatur des Langproduktes über dessen Breite beziehungsweise Umfang kommen. Deshalb ist man nach wie vor bemüht, das Meßergebnis zu verbessern.

Bei einem anderen bekannten ähnlichen Ultraschallwanddickenmeßgerät (US 4,152,380) ist ein umlaufender Sensor des Ultraschallwanddickenmeßgerätes ebenfalls einer Kalibrierhülse zugeordnet. Er ist entweder Teil der Kalibrierhülse oder ist zwischen der Extruderdüse und der Kalibrierhülse angeordnet. Die Ankopplung des mit Abstand vom zu messenden Langprodukt angeordneten Sensors erfolgt vorzugsweise über Wasser. Wie bei dem anderen bekannten Ultraschalldickenmeßgerät ist auch in diesem Fall eine gleichmäßige Temperatur des Langproduktes über den gesamten Meßweg des Sensors nicht gewährleistet.

Bei einem anderen bekannten Wanddickenmeßgerät für Hohlkörper (DE 32 36 036 C2) ist in einer zum Zwecke des Öffnens und Schließens zweigeteilten Form für den Hohlkörper ein Ultraschallsensor mit geringfügig überstehendem Meßkopf angeordnet. In die geöffnete Form wird ein von einem Extruder gelieferter, noch verformbarer Schlauch verbracht, der nach Schließen der Form aufgeblasen und dabei an die Wand gedrückt wird. Bei diesem Stand der Technik findet also die Wanddickenmessung an einer Stelle stationär an einem Hohlkörper, insbesondere einem Behälter, und nicht an einem durchlaufenden Langprodukt statt.

Aufgabe der Erfindung ist es, ein Ultraschallwanddickenmeßgerät für extrudierte Langprodukte zu schaffen, das im Vergleich zu bekannten Ultraschallwanddickenmeßgeräten verbesserte Ergebnisse liefert. Auch soll der für den oder die Sensoren erforderliche Aufwand für deren Unterbringung möglichst gering sein.

Diese Aufgabe wird erfindungsgemäß mit einem Ultraschallwanddickenmeßgerät der eingangs genannten Art dadurch gelöst, daß jeder Sensor in einem zum Langprodukt hin offenen Aufnahmeraum im Extruderwerkzeug oder einem daran unmittelbar befestigten Träger mit einem dem des Extruderwerkzeugs gleichen Kaliberquerschnitt angeordnet ist, wobei seine Sender- und Empfängerseite bündig in der am extrudierten Produkt anliegenden Fläche des Extruderwerkzeuges beziehungsweise des Trägers liegt, und daß jedem Sensor eine zum extrudierten Langprodukt hin offene, insbesondere mit Unterdruck beaufschlagbare, Saugöffnung im Extruderwerkzeug oder im Träger derart zugeordnet ist, daß das Langprodukt gegen die Sender- und Empfängerseite gesogen wird.

Die Integration des Sensors in das Extruderwerkzeug beziehungsweise den daran unmittelbar befestigten Träger mit gleichem Kaliberquerschnitt gewährleistet, daß das zu messende Langprodukt über seine gesamte Breite beziehungsweise seinen gesamten Umfang die gleiche Temperatur hat, weil bis zu dieser Stelle das Langprodukt noch nicht gekühlt worden ist. Durch die Unterdruckbeaufschlagung des Langproduktes an der Meßstelle ist auch gewährleistet, daß sich keine Fehler aufgrund von fehlerhafter Ankopplung ergeben. Der nicht unerhebliche Aufwand einer außerhalb der Kühlkammer angeordneten, mit Unterdruck beaufschlagten Kablibrierhülse mit um sie herum angeordnetem, umlaufenden Meßkopf erübrigt sich, weil die Sensoren im Werkzeug beziehungsweise in dem dafür vorgesehenen Träger fest angeordnet sind.

Es gibt verschiedene zweckmäßige Ausgestaltungen, wie das Langprodukt ohne Luftspalt in Anlage an der Sender- und Empfängerseite des Sensors gehalten wird. Nach einer Ausgestaltung ist der Aufnahmeraum des Sensors an einer Unterdruckquelle angeschlossen. Nach einer anderen Ausgestaltung kann dem Aufnahmeraum des Sensors eine Saugöffnung unmittelbar vor- oder nachgeordnet sein. Diese beiden Arten der Unterdruckbeaufschlagung des Langproduktes lassen sich auch kombinieren. Dies läßt sich besonders einfach verwirklichen, wenn der Aufnahmeraum des Sensors mit der vor- oder nachgeordneten Saugöffnung über einen Kanal verbunden ist.

Nach einer weiteren Ausgestaltung der Erfindung ist bei mehreren über die Breite des Langproduktes verteilter Sensoren eine gemeinsame, als Schlitz ausgebildete Saugöffnung vorgesehen.

Mit den den Aufnahmeräumen der Sensoren nachgeordneten Saugöffnungen, insbesondere einer gemeinsamen, als Schlitz ausgebildeten Saugöffnung, die sich über die gesamte Breite beziehungsweise den gesamten Umfang des Langproduktes erstreckt, läßt sich nicht nur eine optimale Ankopplung des Langproduktes an die Sensoren erreichen, sondern auch eine optimale Oberfläche des Langproduktes, weil nicht nur eventuelle Schleifspuren im Bereich der Sensoren vermieden werden, sondern auch an der Oberfläche aus dem extrudierten Material austretende Verarbeitungshilfsmittel abgesogen werden.

Eine weitere bevorzugte Ausgestaltung der Erfindung sieht vor, daß der unmittelbar am Werkzeug angebrachte Träger temperiert wird, wobei der Träger einen im Verhältnis zum Werkzeugaustrittsquerschnitt konischen Verlauf der Innenfläche haben kann.

Alternativ zu der Anordnung des Sensors in einer zum extrudierten Langprodukt hin offenen Saugöffnung im Extruderwerkzeug beziehungsweise im Träger kann das Ultraschallwanddickenmeßgerät auch derart gestaltet sein, daß jeder Sensor mit der dem extrudierten Langprodukt zugekehrten Sender- und Empfängerseite in einem zum Langprodukt hinweisenden, als Sackloch ausgebildeten Aufnahmeraum im Extruder oder in einem unmittelbar daran befestigten Träger mit einem dem des Extruders gleichen Kaliberquerschnitt angeordnet ist und daß dem Aufnahmeraum des Sensors eine Saugöffnung unmittelbar vor- oder nachgeordnet ist, derart, daß das Langprodukt gegen den Boden des Sackloches gesogen wird.

Im folgenden wird die Erfindung anhand einer ein Ausführungsbeispiel darstellenden Zeichnung näher erläutert. Im einzelnen zeigen:

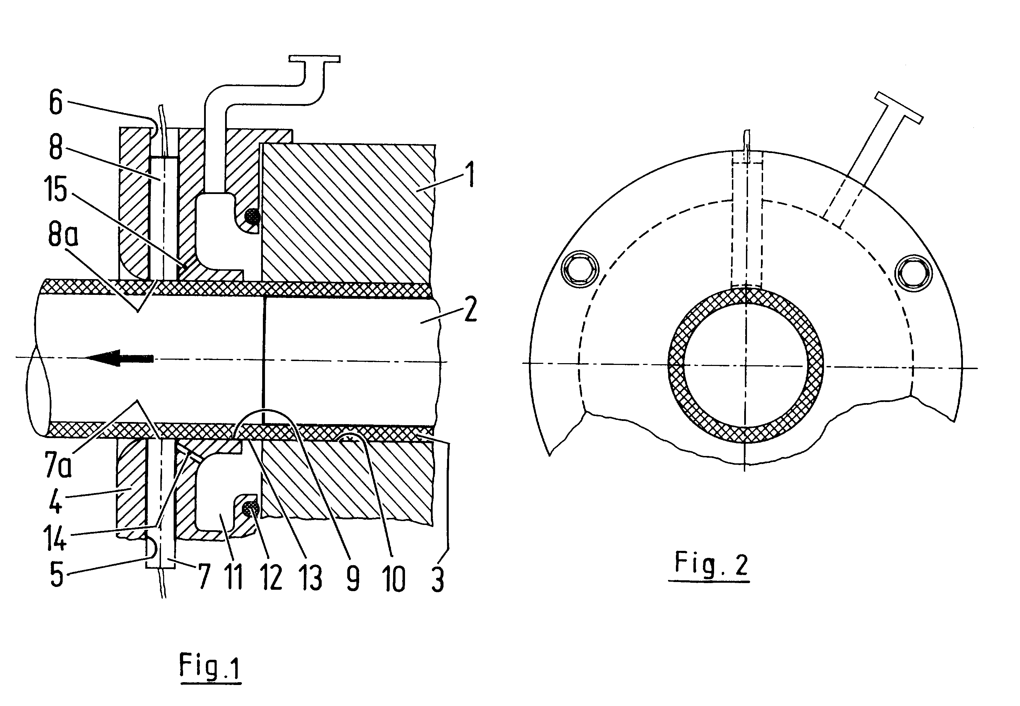

- Fig. 1: ein Extruderwerkzeug für Rohre mit einem Ultraschallwanddickenmeßgerät im Axialschnitt und
- Fig. 2: das Extruderwerkzeug gemäß Fig. 1 in teilweiser Stirnansicht.

An einem Extruderwerkzeug mit einem äußeren Teil 1 und einem Dorn 2 für Rohre 3 ist stirnseitig ein Träger 4 mit gleichem Innenkaliber wie das Werkzeug 1,2 befestigt. In dem Träger 4 sind über dessen Umfang verteilt mehrere radiale Aufnahmeräume 5,6 angeordnet, in denen Ultraschallsensoren 7,8 nach außen abgedichtet untergebracht sind. Diese Sensoren 7,8 liegen mit ihren dem Rohr 3 zugekehrten Sender- und Empfängerseiten 7a,8a bündig in der am Rohr 3 anliegenden Fläche 9,10 des Trägers 4 und des Außenteils 1 des Werkzeuges.

In dem als Ring ausgeführten Träger 4 ist ein Ringkanal 11 ausgebildet, der mit einer Dichtung 12 dicht am Außenteil 1 des Werkzeuges angeschlossen ist und von dem eine als Schlitz ausgebildete, zum Rohr 3 hin offene Saugöffnung 13 ausgeht. Von dem Ringraum 11 gehen auch zu jedem Aufnahmeraum 5,6 Kanäle 14,15 aus, über die ein Unterdruck an den Sender- und Empfängerseiten 7a,8a angelegt wird. Der Ringraum 11 ist über eine Verbindungsleitung 15 an eine Unterdruckquelle angeschlossen. Es ist auch möglich, die Anordnung mit Normaldruck zu betreiben.

Bei dem erfindungsgemäßen Ultraschallwanddickenmeßgerät ist gewährleistet, daß das Rohr 3 im Bereich der Sensoren 7,8 über den gesamten Umfang die gleiche Temperatur hat und fest an der Sender- und Empfängerseite 7a,8a anliegt. Damit sind die Voraussetzungen für eine von Temperatureinflüssen und der Ankopplung unabhängige Dickenmessung gegeben. Aufgrund des Ansaugens des Rohres 3 über die schlitzförmige Saugöffnung 13 wird nicht nur die Anlage verbessert, sondern es werden darüber hinaus auch aus dem Material austretende Verarbeitungshilfsmittel abgesaugt. Sofern diese Saugöffnung nicht, wie im Ausführungsbeispiel in Durchlaufrichtung vor, sondern hinter den Sensoren 7,8 angeordnet ist, wird darüber hinaus auch noch die Oberfläche des Rohres 3 positiv beeinflußt, so daß eventuell an den Sensoren 7,8 entstandene Schleifspuren beseitigt werden.

### Bezugszeichenliste

- 1: äußerer Teil des Extruderwerkzeugs
- 2: Dorn für Rohre
- 3: Rohre
- 4: Träger
- 5,6: radiale Aufnahmeräume
- 7,8: Ultraschallsensoren
- 7a,8a: Sender- und Empfängerseiten
- 9, 10: Fläche
- 11: Ringkanal, Ringraum
- 12: Dichtung
- 13: Saugöffnung, Saugschlitz

## Patentansprüche

1. Ultraschallwanddickenmeßgerät für extrudierte Langprodukte, insbesondere Rohre (3) mit einem oder mehreren feststehenden Sensoren (7,8),
**dadurch gekennzeichnet**, daß jeder Sensor (7,8) in einem zum Langprodukt hin offenen Aufnahmeraum (5,6) im Extruderwerkzeug (1,2) oder in einem unmittelbar daran befestigten Träger (4) mit einem zu dem des Extruderwerkzeugs (1,2) gleichen Kaliberquerschnitt angeordnet ist, wobei die Sender- und Empfängerseite (7a,8a) des Sensors (7,8) flächenbündig in der am extrudierten Langprodukt (3) anliegenden Fläche (9,10) des Extruderwerkzeuges (1,2) beziehungsweise des Trägers (4) liegt, und daß jedem Sensor (7,8) eine zum extrudierten Langprodukt (3) hin offene, insbesondere mit Unterdruck beaufschlagbare, Saugöffnung im Extruderwerkzeug (1,2) beziehungsweise im Träger (4) derart zugeordnet ist, daß das Langprodukt gegen die Sender- und Empfängerseite (7a,8a) des Sensors (7,8) gesogen wird.

2. Ultraschallwanddickenmeßgerät nach Anspruch 1, **dadurch gekennzeichnet**, daß der Aufnahmeraum (5,6) des Sensors an einer Unterdruckquelle angeschlossen ist.

3. Ultcaschallwanddickenmeßgecät nach Anspruch 1, **dadurch gekennzeichnet**, daß dem Aufnahmeraum (5,6) des Sensors (7,8) eine Saugöffnung (13) unmittelbar vor- oder nachgeordnet ist.

4. Ultraschallwanddickenmeßgerät nach Anspruch 3,
**dadurch gekennzeichnet**, daß der Aufnahmeraum (5,6) des Sensors (7,8) mit der vor- oder nachgeordneten Saugöffnung (13) über einen Kanal (14,15) verbunden ist.

5. Ultraschallwanddickenmeßgerät nach einem der Ansprüche 1 bis 4,
**dadurch gekennzeichnet**, daß bei mehreren über die Breite oder den Umfang des extrudierten Langproduktes verteilt angeordneten Sensoren die vor- oder nachgeordneten Saugöffnungen als ein sich über die gesamte Breite beziehungsweise den gesamten Umfang erstreckender Schlitz (13) ausgebildet ist.

6. Ultraschallwanddickenmeßgerät nach einem der Ansprüche 1 bis 5,
**dadurch gekennzeichnet**, daß die Anordnung mit Normaldruck betrieben werden kann.

7. Ultraschallwanddickenmeßgerät nach einem der Ansprüche 1 bis 6,
**dadurch gekennzeichnet**, daß der unmittelbar am Werkzeug angebrachte Träger temperiert wird

8. Ultraschallwanddickenmeßgerät nach einem der Ansprüche 1 bis 7,
**dadurch gekennzeichnet**, daß der unmittelbar am Werkzeug angebrachte Träger einen im Verhältnis zum Werkzeugaustrittsquerschnitt konischen Verlauf der Innenfläche hat.

9. Ultraschallwanddickenmeßgerät nach einem der Ansprüche 1 bis 8,
**dadurch gekennzeichnet**, daß der Ultraschallsensor durch ein zylindrisches Kunststoffteil oder ein zylindrisches Metallteil am Kunststoffrohr angekoppelt wird.

10. Ultraschallwanddickenmeßgerät für extrudierte Langprodukte, insbesondere Rohre, mit einem oder mehreren feststehenden Sensoren,
**dadurch gekennzeichnet**, daß jeder Sensor mit der dem extrudierten Langprodukt zugekehrten Sender- und Empfängerseite in einem zum Langprodukt hinweisenden, als Sackloch ausgebildeten Aufnahmeraum im Extruder oder in einem unmittelbar daran befestigten Träger mit einem zu dem des Extruders gleichen Kaliberquerschnitt angeordnet ist, und daß dem Aufnahmeraum des Sensors eine Saugöffnung unmittelbar vor- oder nachgeordnet ist, derart, daß das Langprodukt gegen den Boden des Sackloches gesogen wird.

## Claims

1. An ultrasonic wall thickness measuring apparatus for extruded elongate products, more particularly tubes (3), having one or more fixed sensors (7, 8) characterized in that each sensor (7, 8) is disposed in a receiving space (5, 6), open in the direction of the elongate product, in the extruder tool (1, 2) or in a support (4) directly attached thereto with a cross-section of calibre equal to that of the extruded tool (1, 2), the transmitter and receiver sides (7a, 8a) of the sensor (7, 8) being disposed flush in contact in the surface (9, 10) of the extruder tool (1, 2) or the support (4) bearing against the extruded elongate product (3), and a suction opening which is open in the direction of the extruded elongate product (3) and can be acted upon more particularly by negative pressure is so associated with each sensor (7, 8) in the extruder tool (1, 2) or in the support (4) that the elongate product is sucked against the transmitter and receiver sides (7a, 8a) of the sensor (7, 8).

2. An ultrasonic wall thickness measuring apparatus according to claim 1, characterized in that the receiving space (5, 6) of the sensor is connected to a source of negative pressure.

3. An ultrasonic wall thickness measuring apparatus according to claim 1, characterized in that a suction opening (13) is disposed immediately upstream or downstream of the receiving space (5, 6) of the sensor (7, 8).

4. An ultrasonic wall thickness measuring apparatus according to claim 3, characterized in that the receiving space (5, 6) of the sensor (7, 8) is connected to the upstream or downstream suction opening (13) via a channel (14, 15).

5. An ultrasonic wall thickness measuring apparatus according to one of claims 1 to 4, characterized in that if a number of sensors are disposed distributed over the width or the periphery of the extruded elongate product, the upstream or downstream suction openings take the form of a slot (13) extending over the whole width or the whole periphery.

6. An ultrasonic wall thickness measuring apparatus according to one of claims 1 to 5, characterized in that the arrangement can be operated by normal pressure.

7. An ultrasonic wall thickness measuring apparatus according to one of claims 1 to 6, characterized in that the support directly attached to the tool is tempered.

8. An ultrasonic wall thickness measuring apparatus according to one of claims 1 to 7, characterized in that the support directly attached to the tool has a course of the inner surface which is conical in relation to the tool delivery cross-section.

9. An ultrasonic wall thickness measuring apparatus according to one of claims 1 to 8, characterized in that the ultrasonic sensor is connected to the plastics tube via a cylindrical plastics member or a cylindrical metal member.

10. An ultrasonic wall thickness measuring apparatus for extruded elongate products, more particularly tubes, having one or more fixed sensors, characterized in that each sensor is disposed with the transmitter and receiver sides adjacent the extruded elongate product in a receiving space, pointing towards the elongate product and taking the form of a blind bore, in the extruder or in a support directly attached thereto with a cross-section of calibre equal to that of the extruder, and a suction opening is so disposed directly upstream or downstream of the receiving space of the sensor that the elongate product is sucked against the bottom of the blind bore.

## Revendications

1. Appareil de mesure par ultrason de l'épaisseur de paroi pour des produits allongés extrudés, notamment des tubes (3), comprenant un ou plusieurs capteurs (7, 8) fixes, caractérisé en ce que chaque capteur (7, 8) est disposé dans un logement (5, 6) ouvert en direction du produit allongé et situé dans l'outil d'extrusion (1, 2) ou dans un support (4) fixé directement à l'outil d'extrusion et ayant une section transversale de calibre égale à celle de l'outil d'extrusion (1, 2), le côté émetteur et le côté récepteur (7a, 8a) du capteur (7, 8) étant disposés à fleur de la surface (9, 10) de l'outil d'extrusion (1, 2) ou du support (4) qui est adjacente au produit allongé (3) extrudé, et en ce qu'une ouverture d'aspiration située dans l'outil d'extrusion (1, 2) ou dans le support (4), qui est ouverte en direction du produit allongé (3) extrudé et peut être soumise notamment à un vide partiel, est associée à chaque capteur (7, 8) de telle façon que le produit allongé est aspiré contre le côté émetteur et le côté récepteur (7a, 8a) du capteur (7, 8).

2. Appareil de mesure par ultrason de l'épaisseur de paroi selon la revendication 1, caractérisé en ce que le logement (5, 6) du capteur est relié à une source de vide partiel.

3. Appareil de mesure par ultrason d'épaisseur de paroi selon la revendication 1, caractérisé en ce qu'une ouverture d'aspiration (13) est disposée directement en amont ou en aval du logement (5, 6) du capteur (7, 8).

4. Appareil de mesure par ultrason de l'épaisseur de paroi selon la revendication 3, caractérisé en ce que le logement (5, 6) du capteur (7, 8) est relié à l'ouverture d'aspiration (13) disposée en amont ou en aval de celle-ci par l'intermédiaire d'un conduit (14, 15).

5. Appareil de mesure par ultrason de l'épaisseur de paroi selon l'une quelconque des revendications 1 à 4, caractérisé en ce que dans le cas de plusieurs capteurs répartis sur la largeur ou le pourtour du produit allongé, les ouvertures d'aspiration disposées en amont ou en aval des capteurs sont réalisées sous la forme d'une fente (13) s'étendant sur toute la largeur ou sur tout le pourtour.

6. Appareil de mesure par ultrason de l'épaisseur de paroi selon l'une quelconque des revendications 1 à 5, caractérisé en ce que l'agencement peut fonctionner avec une pression standardisée.

7. Appareil de mesure par ultrason de l'épaisseur de paroi selon l'une quelconque des revendications 1 à 6, caractérisé en ce que le support monté directement sur l'outil est réglé en température.

8. Appareil de mesure par ultrason de l'épaisseur de paroi selon l'une quelconque des revendications 1 à 7, caractérisé en ce que le support monté directement sur l'outil comporte, par rapport à la section transversale de sortie de l'outil, un profil conique de la surface intérieure.

9. Appareil de mesure par ultrason de l'épaisseur de paroi selon l'une quelconque des revendications 1 à 8, caractérisé en ce que le capteur à ultrasons est couplé au tube en matière plastique par l'intermédiaire d'une pièce cylindrique en matière plastique ou une pièce métallique cylindrique.

10. Appareil de mesure par ultrason de l'épaisseur de paroi pour des produits allongés extrudés, notamment des tubes, comprenant un ou plusieurs capteurs fixes, caractérisé en ce que chaque capteur est disposé avec le côté émetteur ou le côté récepteur en regard du produit allongé extrudé dans un logement orienté vers le produit lLong et réalisé sous la forme d'un trou borgne qui est situé dans l'extrudeuse ou dans un support fixé directement à cette extrudeuse, et ayant une section transversaLle de calibre égaLle à celle de l'extrudeuse, et en ce qu'une ouverture d'aspiration est directement disposée en aval ou en amont du logement du capteur de telle sorte que le produit allongé est aspiré contre le fond du trou borgne.
